# EUROPEAN PATENT APPLICATION

(11) **EP 4 835 841 A1**
(43) Date of publication of application: **04.11.2026**
(21) Application number: 26204639.4
(22) Date of filing: 11.09.2026
(51) Int. Cl.: G06V 20/52

(54) **ENVIRONMENT MAINTENANCE METHOD AND APPARATUS, ELECTRONIC DEVICE, AND STORAGE MEDIUM**

(30) Priority: 13.08.2026 SG 10202602823
(71) Applicant: XG TECH PTE. LTD., Singapore 179098 (SG)
(72) Inventor: LIN, Wei, 179098 Singapore (SG); HUANG, Jingchang, 179098 Singapore (SG)
(74) Representative: Patentanwälte Magenbauer & Kollegen Partnerschaft mbB

(57) **Abstract**

The present disclosure provides an environment maintenance method and apparatus, an electronic device, and a storage medium. The method includes: acquiring (S110) environmental data; detecting (S120), based on the environmental data, a target object having a pollution property; determining (S130) pollution semantics of the target object when the target object is detected; analyzing (S140) a pollution diffusion risk of the target object based on the pollution semantics of the target object; generating (S150), based on the pollution semantics of the target object and the pollution diffusion risk, a cleaning strategy corresponding to the target object; and performing (S160), based on the cleaning strategy, a cleaning task by invoking one or more cleaning devices.

## Description

### TECHNICAL FIELD

The present disclosure relates to the technical field of a smart home, and in particular, to an environment maintenance method and apparatus, an electronic device, and a storage medium.

### BACKGROUND

A cleaning device is an important part of a smart home. The cleaning device typically performs a cleaning task under the control of a user or based on a preset time in a preset cleaning approach. When performing the cleaning task, the cleaning device merely simply identifies an obstacle on a traveling path, and continues to uniformly clean objects on the traveling path following the preset cleaning approach when it is determined that no obstacle is present.

The cleaning device being prone to misidentifying a pollutant as an obstacle and avoiding the pollutant, and the approach by which the cleaning device performs the cleaning task either under the control of the user or based on the preset time both result in failure to clean the pollutant in time. Moreover, when cleaning the pollutant, the cleaning device treats the pollutant only as an ordinary object to be cleaned, and performs the cleaning task in the preset cleaning approach, which is prone to damaging the cleaning device and polluting a surrounding environment.

### SUMMARY

Embodiments of the present disclosure provide an environment maintenance method and apparatus, an electronic device, and a storage medium, to discover a pollutant in time, formulate a corresponding cleaning strategy for the discovered pollutant, and invoke a corresponding cleaning device to perform a cleaning task, thereby resolving problems that the pollutant cannot be cleaned in time, and that the cleaning device is prone to damage and a surrounding environment is polluted when the pollutant is cleaned.

According to a first aspect, in an embodiment of the present disclosure, there is provided an environment maintenance method, applied to an intelligent system, including:
acquiring environmental data;
detecting, based on the environmental data, a target object having a pollution property;
determining pollution semantics of the target object when the target object is detected;
analyzing a pollution diffusion risk of the target object based on the pollution semantics of the target object;
generating, based on the pollution semantics of the target object and the pollution diffusion risk, a cleaning strategy corresponding to the target object; and
performing, based on the cleaning strategy, a cleaning task by invoking one or more cleaning devices.

According to a second aspect, in an embodiment of the present disclosure, there is provided an environment maintenance apparatus, applied to an intelligent system, including:
an environment perception module, configured for acquiring environmental data;
a pollution detection module, configured for detecting, based on the environmental data, a target object having a pollution property;
a pollution semantic understanding module, configured for determining pollution semantics of the target object when the target object is detected;
a pollution diffusion risk inference module, configured for analyzing a pollution diffusion risk of the target object based on the pollution semantics of the target object;
a cleaning strategy generation module, configured for generating, based on the pollution semantics of the target object and the pollution diffusion risk, a cleaning strategy corresponding to the target object; and
a collaborative control module, configured for performing, based on the cleaning strategy, a cleaning task by invoking one or more cleaning devices.

According to a third aspect, in an embodiment of the present disclosure, there is provided an electronic device. The electronic device includes a processor and a memory for storing processor-executable instructions. The processor is configured for reading the executable instructions from the memory and executing the instructions to implement the environment maintenance method of the first aspect described above.

According to a fourth aspect, in an embodiment of the present disclosure, there is provided a computer-readable storage medium. The storage medium stores a computer program, wherein the computer program is used for performing the environment maintenance method of the first aspect described above.

According to a fifth aspect, in an embodiment of the present disclosure, there is provided a computer program product. The computer program product includes computer program instructions, wherein the computer program instructions, when executed by a processor, cause the processor to perform the environment maintenance method of the first aspect described above.

In the technical solutions provided by the embodiments of the present disclosure, the environmental data is acquired, the target object having a pollution property is detected based on the environmental data, the pollution semantics of the target object is determined when the target object is detected, the pollution diffusion risk is analyzed based on the pollution semantics, and further the cleaning strategy is generated for the target object based on the pollution semantics and the pollution diffusion risk. The one or more cleaning devices are invoked to perform the cleaning task, so that the target object is cleaned, thereby resolving the problems that the pollutant cannot be cleaned in time, and that the cleaning device is prone to damage and the surrounding environment is polluted when the pollutant is cleaned.

### BRIEF DESCRIPTION OF DRAWINGS

The foregoing and other objectives, features, and advantages of the present disclosure will become more apparent from the more detailed description of the embodiments of the present disclosure with reference to the accompanying drawings. The accompanying drawings are used for a further understanding of the embodiments of the present disclosure, constitute a part of this specification, are used together with the embodiments of the present disclosure to explain the present disclosure, and do not constitute a limitation to the present disclosure. In the accompanying drawings, same reference signs typically represent same components or steps.
FIG. 1 is a schematic diagram illustrating an architecture of an intelligent system according to an embodiment of the present disclosure;
FIG. 2 is a schematic diagram illustrating an architecture of a control device 20 in an intelligent system according to an embodiment of the present disclosure;
FIG. 3 is a schematic flowchart illustrating an environment maintenance method according to an embodiment of the present disclosure;
FIG. 4 is a schematic diagram illustrating a specific procedure of step S120 in an environment maintenance method according to an embodiment of the present disclosure;
FIG. 5 is a schematic diagram illustrating a specific procedure of step S130 in an environment maintenance method according to an embodiment of the present disclosure;
FIG. 6 is a schematic diagram illustrating a specific procedure of step S140 in an environment maintenance method according to an embodiment of the present disclosure;
FIG. 7 is a schematic diagram illustrating a specific procedure of step S150 in an environment maintenance method according to an embodiment of the present disclosure;
FIG. 8 is a schematic flowchart illustrating environmental data evaluation and cleaning strategy update in an environment maintenance method according to an embodiment of the present disclosure;
FIG. 9 is a schematic flowchart illustrating pollution pattern analysis and environment maintenance strategy generation in an environment maintenance method according to an embodiment of the present disclosure;
FIG. 10 is a schematic diagram illustrating a structure of an environment maintenance apparatus according to an embodiment of the present disclosure; and
FIG. 11 is a schematic diagram illustrating a structure of an electronic device according to an embodiment of the present disclosure.

### DETAILED DESCRIPTION OF THE EMBODIMENTS

Exemplary embodiments of the present disclosure are described below in detail with reference to accompanying drawings. Obviously, the described embodiments are merely a part, rather than all, of embodiments of the present disclosure. It should be understood that the present disclosure is not limited by the exemplary embodiments described herein.

It should be noted that, unless otherwise specified, the scope of the present disclosure is not limited by relative arrangement, numeric expressions, and numerical values of components and steps described in these embodiments.

It should be noted that in the description of the present disclosure, orientations or positional relationships indicated by terms such as "inner side", "outer side", "up", "down" are orientations or position relationships based on the accompanying drawings. These terms are merely intended to facilitate the description of the present disclosure and simplify the description, rather than to indicate or imply that an indicated apparatus or element must have a specific orientation, and therefore should not be construed as limiting the present disclosure.

In the present disclosure, descriptions involving "first", "second", and the like are used for descriptive purposes only, and are not to be construed as indicating or implying their relative importance or implicitly indicating the number of the indicated technical features.

### Overview of Application

In the field of smart home technologies, a cleaning device typically performs a cleaning task under the control of a user or based on preset time in a preset cleaning approach. When performing the cleaning task, the cleaning device merely simply identifies an obstacle on a traveling path, and when it is determined that no obstacle is present, continues to uniformly clean objects on the traveling path in the preset cleaning approach. However, objects in a real environment may be pollutants having a pollution property, such as cat feces, vomit, a liquid, a glass fragment, a pill, an oil stain, and cat litter. The cleaning device being prone to misidentifying the pollutant as an obstacle and avoiding the pollutant, and the manner of performing the cleaning task under the control of the user or based on the preset time both results in an inability to clean the pollutant in time. Moreover, when cleaning the pollutant, the cleaning device only treats the pollutant as an ordinary object to be cleaned, and performs the cleaning task in the preset cleaning approach, which is prone to damaging the cleaning device and polluting a surrounding environment.

For example, for the pollutants such as cat feces, vomit, oil stains, and the like, if the cleaning device misidentifies these pollutants as obstacles and avoids the pollutants, the pollutants are not to be cleaned, or if the cleaning device only initiates cleaning at specific time, these pollutants cannot be cleaned in time, causing an odor generated by the pollutants to pollute the air within the environment, or causing the pollutants to be carried to other positions after being stepped on. If the cleaning device performs cleaning in a preset cleaning approach, such as using a conventional roller brush or mopping cloth, the pollutants may adhere to the roller brush or the mopping cloth, polluting or even damaging the cleaning device, and being spread and diffused as the cleaning device moves, resulting in pollution of the surrounding environment.

In view of the above problems, an embodiment of the present disclosure provides an environment maintenance method. In the method, environmental data may be actively acquired, and a target object having a pollution property is detected based on the environmental data. Pollution semantics of the target object is determined, a pollution diffusion risk of the target object is analyzed, a cleaning strategy adapted to the target object is further generated, and one or more cleaning devices are invoked based on the cleaning strategy to perform a cleaning task, to clean the target object. This resolves problems that the pollutant cannot be cleaned in time, and the cleaning device is prone to damage and the surrounding environment is polluted when the pollutant is cleaned.

### Exemplary System

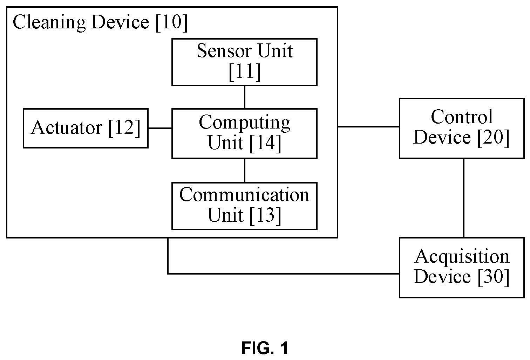

FIG. 1 is a schematic diagram illustrating an architecture of an intelligent system according to an embodiment of the present disclosure. As shown in FIG. 1, the environment maintenance method provided by this embodiment of the present disclosure may be applied to an intelligent system. The intelligent system includes a cleaning device 10, an acquisition device 30, and a control device 20.

The cleaning device 10 may acquire environmental data and perform a cleaning task within a maintained environment. The acquisition device 30 may acquire the environmental data, for example, acquiring the environmental data from one or more angles of view. The control device 20 may perform data interaction with the cleaning device 10 and the acquisition device 30, for example, receiving environmental data acquired by the cleaning device 10 and the acquisition device 30, generating different strategies (such as a cleaning strategy, an acquisition strategy, an environment maintenance strategy) based on the environmental data, and sending control instructions to corresponding devices (such as the cleaning device 10 and the acquisition device 30) based on the generated strategies, and the like.

In an implementation, the cleaning device 10 may be a robot having a cleaning function, such as a sweeping robot, a mopping robot, an integrated sweeping-and-mopping robot, or a cleaning service robot. The cleaning device 10 may alternatively be a device having an air purification function, such as an air purifier, a sterilizer, or a dehumidifier.

As shown in FIG. 1, the cleaning device 10 may include a sensor unit 11 and an actuator 12.

The sensor unit 11 may include at least one of a visual sensor, a ranging sensor, an inertial sensor, and a status sensor.

The visual sensor may be, for example, a color (Red Green Blue, RGB) camera, a depth camera, a panoramic camera, or an infrared camera, for capturing the environmental data, such as an RGB image, a depth image, a panoramic image, or an infrared image. The ranging sensor may be, for example, LiDAR, a millimeter-wave radar, or a ToF (Time-of-Flight) sensor, for measuring a distance between the cleaning device 10 and an object in the maintained environment. The inertial sensor may be, for example, an IMU (Inertial Measurement Unit), or an odometer, for pose estimation and dead reckoning of the cleaning device 10. The status sensor may be, for example, a cliff sensor, a collision sensor, a dustbin-full sensor, a water tank level sensor, or a roller brush jam sensor, for monitoring a status of the cleaning device 10 and providing safety protection.

The actuator 12 may include a travel drive mechanism and a cleaning mechanism, wherein the travel drive mechanism may be a drive wheel, a swivel caster, or the like, for achieving movement of the cleaning device 10. The cleaning mechanism may include at least one of a roller brush, a side brush, a suction motor, a mopping cloth, a water pump, and a squeegee, for performing a cleaning operation.

In an implementation, the cleaning device 10 may further include a communication unit 13. The communication unit 13 may support a wired or wireless network communication manner such as Ethernet, Wi-Fi (Wireless Fidelity), Bluetooth, 5G (fifth-generation mobile communication), 4G (fourth-generation mobile communication), or the like, for interacting with the control device 20.

In an implementation, the cleaning device 10 may further include a computing unit 14. The computing unit 14 may perform a task such as pollutant identification on the acquired environmental data to obtain an identification result, and send the identification result to the control device 20. Illustratively, an object recognition model may be deployed in the cleaning device 10, and the computing unit 14 may include a processor, wherein the processor may perform a task such as pollutant identification by the object recognition model.

In an implementation, the object recognition model may be deployed in the control device 20. The cleaning device 10 may send the acquired environmental data to the control device 20, and the control device 20 performs a task such as pollutant identification by the object recognition model. In this way, the cleaning device 10 does not need to perform the pollutant identification task, thereby reducing the power consumption of the cleaning device 10.

In an implementation, the acquisition device 30 may include a camera, such as a pan-tilt device, a patrol robot, an environmental monitoring camera, a smart doorbell camera, a camera built into a smart home appliance, or the like. The acquisition device 30 may acquire the environmental data from a viewing angle different from that of the cleaning device 10. The acquisition device 30 may communicate with at least one of the cleaning device 10 and the control device 20 in a wired or wireless network communication manner. In this way, the acquisition device 30 may send the acquired environmental data to the cleaning device 10 or the control device 20, and receive an instruction sent by the control device 20.

In some examples, raw environmental data acquired by the above-mentioned acquisition device 30 may be subjected to multi-view fusion with raw environmental data acquired by the cleaning device 10 to obtain the environmental data, so as to improve the accuracy of pollutant identification in scenarios such as a shadow, a reflection, occlusion, low illumination at night, blurring, a long distance, and the like. Multi-view fusion is applicable to complex scenarios such as a large home, multi-room, the presence of occlusion, poor ambient lighting, and a weak data acquisition capability of a single acquisition device 30.

In an implementation, the intelligent system may further include one or more auxiliary devices, such as a smart speech system, a smart interactive device, a warning system, or the like. These auxiliary devices may communicate with the control device 20, and cooperate with the cleaning device 10 to perform an environment maintenance task under the scheduling of the control device 20. Illustratively, when a pollutant is detected, the control device 20 may schedule the warning system to issue a warning, to alert a user to pay attention to the pollutant to avoid accidental contact or the like. When user confirmation is required, the control device 20 may send a speech prompt to the user through the smart speech system, or present an interactive interface to the user through the smart interactive device.

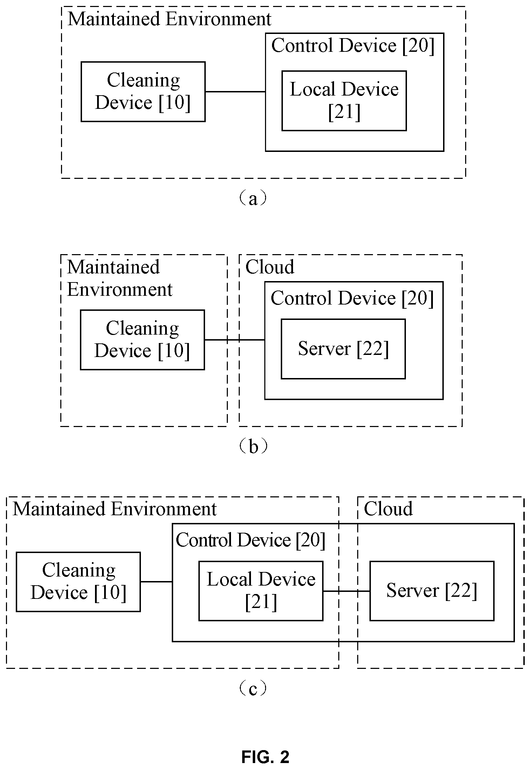

FIG. 2 is a schematic diagram illustrating an architecture of a control device 20 in an intelligent system according to an embodiment of the present disclosure. As shown in FIG. 2, the control device 20 in the present disclosure may be implemented in a variety of ways.

In an implementation, as shown in (a) of FIG. 2, the control device 20 may be a local device 21 within the maintained environment. The local device 21 may be an AI PC (Artificial Intelligence Personal Computer), a smart speaker, a home gateway, a smart set-top box, or the like. The AI PC refers to a personal computing device that integrates a NPU (Neural network Processing Unit), is capable of locally running a large language model and a personal agent, and ensures data privacy and a low-latency response.

The control device 20 being an AI PC is used as an example. An LLM (Large Language Model) may be deployed in the AI PC, and the AI PC may use the large language model to perform at least one of tasks such as pollution semantic analysis, pollution diffusion risk inference, cleaning strategy generation, acquisition strategy generation, and environment maintenance strategy generation.

In an implementation, as shown in (b) of FIG. 2, the control device 20 may be a cloud server 22. A large language model may be deployed in the server 22. In this way, at least one of tasks such as pollution semantic analysis, pollution diffusion risk inference, cleaning strategy generation, acquisition strategy generation, and environment maintenance strategy generation may be performed in the server 22, without a need to locally deploy a computing device, or without a need to locally deploy a high-computing-power computing device, thereby reducing costs for the user to deploy the intelligent system.

In an implementation, as shown in (c) of FIG. 2, the control device 20 may adopt a cloud-local collaborative deployment manner. That is, the control device 20 may include a cloud server 22 and a local device 21. The local device 21 may communicate with the server 22 and the cleaning device 10. A large language model may be deployed in the server 22, wherein the large language model is used for performing a heavyweight inference task, for example, at least one of tasks such as pollution semantic analysis, pollution diffusion risk inference, cleaning strategy generation, and dynamic path planning. An object recognition model may be deployed in the local device 21, wherein the object recognition model is used for performing a lightweight task, such as pollutant identification. The local device 21 may further generate a corresponding control instruction based on the cleaning strategy, the acquisition strategy, and the environment maintenance strategy of the server 22, and control a corresponding device (such as the cleaning device 10 or the acquisition device 30) to perform a corresponding action.

### Exemplary Method

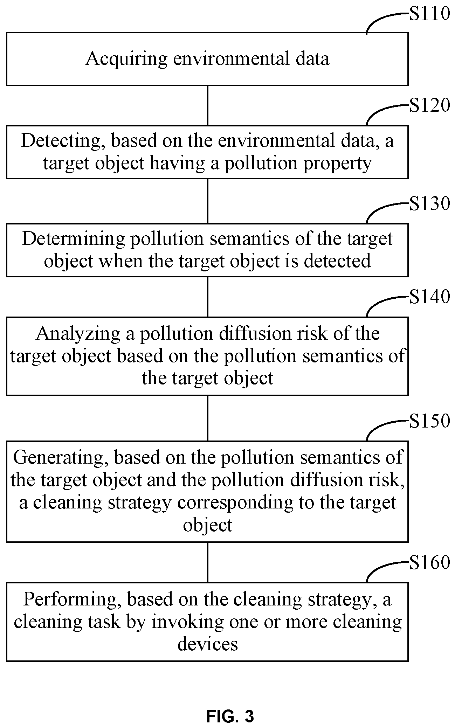

FIG. 3 is a schematic flowchart illustrating an environment maintenance method according to an embodiment of the present disclosure. The method may be performed by a control device 20 in an intelligent system. The environment maintenance method provided by embodiments of the present disclosure is described by an example below with reference to FIG. 3.

As shown in FIG. 3, in an embodiment, the method includes step S110 to step S160 below.

Step S110: Acquiring environmental data.

The environmental data refers to data that may reflect an environment maintained by the intelligent system.

In an implementation, the environment maintained by the intelligent system may include an indoor environment and an outdoor environment.

Illustratively, the indoor environment is, for example, an environment of a place such as a house, an office, a shopping mall, a restaurant, or a hospital.

Illustratively, the outdoor environment is, for example, an environment of a place such as a courtyard or a sports field.

In an implementation, the environmental data may include at least one of image visual data and sensing measurement data.

The image visual data may include an RGB image, a depth image, a panoramic image, an infrared image, or the like. The sensing measurement data may include lidar data, millimeter-wave radar data, time-of-flight sensor data, or the like.

In an implementation, the environmental data may be acquired by a cleaning device 10, the environmental data may be acquired by an acquisition device 30 in the environment maintained by the intelligent system, or the environmental data may be jointly acquired by the cleaning device 10 and the acquisition device 30.

In an implementation, the environmental data may be acquired by the cleaning device 10 while performing a cleaning task, or may be continuously or periodically acquired by the acquisition device 30.

Step S120: Detecting, based on the environmental data, a target object having a pollution property.

The target object having a pollution property refers to an object that is present in the maintained environment and that may pollute a surrounding environment, namely, a pollutant, such as cat feces, vomit, a liquid, a glass fragment, a pill, an oil stain, and cat litter.

In an implementation, an object recognition model may be used for detecting the environmental data, identifying an object present in the maintained environment, and further determining whether the object has a pollution property, that is, determining whether the object is a pollutant.

Illustratively, the object recognition model includes, but is not limited to, a model such as YOLO (You Only Look Once) or a vision-language model (such as GroundingDINO).

Based on the acquired environmental data, the intelligent system may actively detect a target object having a pollution property in time, and further clean the target object in time, to effectively maintain the cleanliness of the environment.

Step S130: Determining pollution semantics of the target object when the target object is detected.

The pollution semantics is used for representing a pollution attribute of the pollutant, and is a semantic description of the pollution attribute of the pollutant.

In an implementation, the pollution attribute refers to a physical attribute related to the pollution property, for example, diffusivity, adhesiveness, fluidity, hazardousness, and transmissibility. Diffusivity may be used for representing a capability of the pollutant to spread to the surroundings, adhesiveness may be used for representing a capability of the pollutant to adhere to a ground or a device, fluidity may be used for representing a capability of the pollutant to flow, hazardousness may be used for representing a degree of harm that may be caused by the pollutant to a device or to a person or animal, and transmissibility may be used for representing a manner in which the pollutant is spread by the cleaning device.

In an implementation, the pollutant may correspond to at least one pollution attribute.

In an implementation, a format of the pollution semantics may be "pollution attribute 1, pollution attribute 2, ..., pollution attribute n pollution".

Illustratively, pollution semantics corresponding to cat feces is "diffusion, adhesion, and transmission pollution", pollution semantics corresponding to a liquid is "diffusion, fluidity, and hazard pollution", pollution semantics corresponding to an oil stain is "adhesion pollution", pollution semantics corresponding to a glass fragment is "hazard pollution", and pollution semantics corresponding to vomit is "diffusion, adhesion, and transmission pollution".

In an implementation, the pollution semantics may further represent a risk level corresponding to the pollution attribute of the pollutant. For example, the risk level may include low, medium, high, extremely high, and the like.

In an implementation, if the pollution semantics represents the risk level corresponding to the pollution attribute of the pollutant, the format of the pollution semantics may be "risk level + pollution attribute 1, risk level + pollution attribute 2, ..., risk level + pollution attribute n pollution".

Illustratively, pollution semantics corresponding to cat feces is "high-diffusion, high-adhesion, and high-transmission pollution", pollution semantics corresponding to a liquid is "high-diffusion, high-fluidity, and medium-hazard pollution", pollution semantics corresponding to an oil stain is "high-adhesion pollution", pollution semantics corresponding to a glass fragment is "extremely-high-hazard pollution", and pollution semantics corresponding to vomit is "high-diffusion, high-adhesion, and high-transmission pollution".

When detecting the target object, the intelligent system may provide, by accurately determining the pollution semantics of the target object, effective data support for subsequently generating a targeted cleaning strategy.

Step S140: Analyzing a pollution diffusion risk of the target object based on the pollution semantics of the target object.

The pollution diffusion risk refers to a possibility and consequence of the pollutant spreading to the surrounding environment and polluting another object.

Illustratively, for cat feces, based on pollution semantics of the cat feces being "high-diffusion, high-adhesion, and high-transmission pollution", it may be analyzed whether the cat feces may be adhere to another object, such as adhering to a roller brush or a tire of the cleaning device 10, whether the cat feces may spread to the surrounding environment, such as a surrounding carpet, and whether the cat feces may be transmitted throughout an entire room.

Illustratively, for a liquid, based on pollution semantics of the liquid being "high-diffusion, high-fluidity, and medium-hazard pollution", it may be analyzed whether the liquid may spread or flow to a surrounding object, such as an electrical outlet or a wooden floor, and whether the liquid possibly causes slipping.

The intelligent system may accurately analyze the pollution diffusion risk of the target object based on the pollution semantics of the target object, thereby providing effective data support for subsequently generating the targeted cleaning strategy.

Step S150: Generating, based on the pollution semantics of the target object and the pollution diffusion risk, a cleaning strategy corresponding to the target object.

The cleaning strategy refers to a cleaning action plan formulated for the target object.

In an implementation, the cleaning strategy includes one or more cleaning devices 10 that participate in cleaning the target object, and a cleaning task that needs to be performed by each cleaning device 10. The cleaning task may specify information such as a cleaning priority, a cleaning parameter, a cleaning mode, a cleaning route, and a cleaning prompt of the cleaning device 10.

Illustratively, for a liquid, based on pollution semantics of the liquid being "high-diffusion, high-fluidity, and medium-hazard pollution", and a pollution diffusion risk of the liquid being a possibility of spreading to an electrical outlet and possibly causing slipping, a cleaning strategy is generated. The cleaning strategy may include a cleaning device 10 participating in cleaning being a sweeping robot. A cleaning task performed by the sweeping robot specifies a reduced travel speed, priority cleaning of the target object, and adoption of a water-absorption mode.

Illustratively, for cat feces, based on pollution semantics of the cat feces being "high-diffusion, high-adhesion, and high-transmission pollution", and a pollution diffusion risk of the cat feces being a possibility of adhering to a roller brush or a tire of the cleaning device 10, a possibility of spreading to a carpet, and a possibility of being transmitted throughout an entire room, a cleaning strategy is generated. The cleaning strategy may include cleaning devices 10 participating in cleaning being an integrated sweeping-and-mopping robot and an air purifier. A cleaning task performed by the integrated sweeping-and-mopping robot specifies disabling the roller brush, disabling mopping, and re-planning a traveling route to detour. A cleaning task performed by the air purifier specifies adoption of a sterilization mode, and requires a cleaning prompt to be issued for user confirmation before the cleaning task is performed.

Illustratively, for a glass fragment, based on pollution semantics of the glass fragment being "extremely-high-hazard pollution", and a pollution diffusion risk of the glass fragment being a possibility of posing a hazard to a surrounding environment, a cleaning strategy is generated. The cleaning strategy may include a cleaning device 10 participating in cleaning being a sweeping robot. A cleaning task performed by the sweeping robot specifies priority cleaning of the target object, limiting a rotational speed of a roller brush, and adoption of a hazardous-material cleaning mode.

The cleaning strategy generated by the intelligent system is highly targeted to the target object, which can effectively ensure the cleaning effectiveness of the target object.

Step S160: Performing, based on the cleaning strategy, a cleaning task by invoking one or more cleaning devices.

In an implementation, a control instruction may be sent to each of one or more cleaning devices 10 based on the cleaning strategy, wherein the control instruction is used for indicating a corresponding cleaning device 10 to perform the cleaning task.

Illustratively, for cat feces, if the cleaning strategy includes cleaning devices 10 participating in cleaning being an integrated sweeping-and-mopping robot and an air purifier. A cleaning task performed by the integrated sweeping-and-mopping robot specifies disabling a roller brush, disabling mopping, and re-planning a traveling route to detour. A cleaning task performed by the air purifier specifies adoption of a sterilization mode, and requires a cleaning prompt to be issued for user confirmation before the cleaning task is performed. A first control instruction and a second control instruction are generated based on the cleaning strategy, the first control instruction is sent to the integrated sweeping-and-mopping robot, and the second control instruction is sent to the air purifier, to invoke the sweeping robot to re-plan the traveling route to detour around the cat feces, and to disable the roller brush and disable mopping when traveling near the cat feces, and to invoke the air purifier to issue a cleaning prompt, and to activate a sterilization mode after a user confirms cleaning.

In the technical solution provided by this embodiment of the present disclosure, the environmental data is actively acquired, and the target object having a pollution property is detected based on the environmental data. Pollution semantics of the target object is determined, a pollution diffusion risk of the target object is analyzed, a cleaning strategy adapted to the target object is further generated, and one or more cleaning devices are invoked based on the cleaning strategy to perform a cleaning task, to clean the target object. This resolves problems that the pollutant cannot be cleaned in time, and the cleaning device is prone to damage and the surrounding environment is polluted when the pollutant is cleaned.

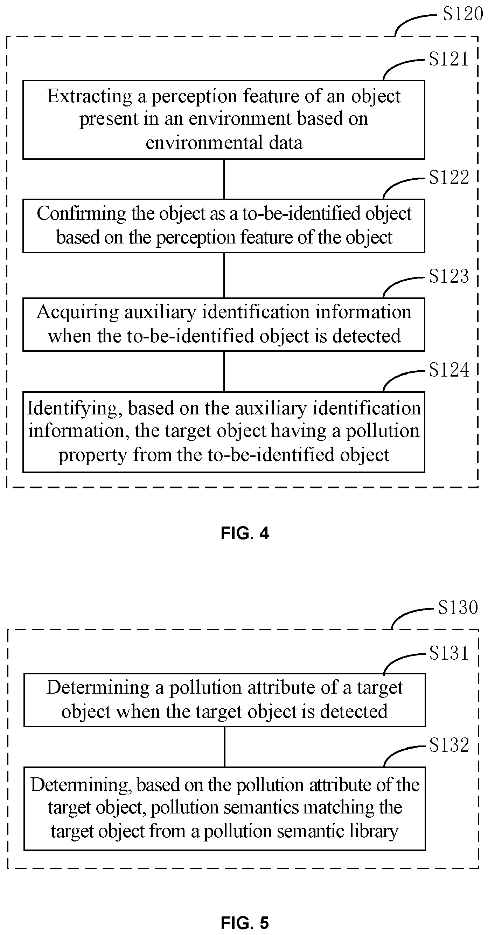

FIG. 4 is a schematic diagram illustrating a specific procedure of step S120 in an environment maintenance method according to an embodiment of the present disclosure. As shown in FIG. 4, in an embodiment, step S120 described in the above may include step S121 to step S124 below.

Step S121: Extracting a perception feature of an object present in an environment based on environmental data.

The environmental data includes at least one of image visual data and sensing measurement data, and the perception feature includes at least one of a visual feature and a sensing feature.

In an implementation, the visual feature may include features of the object such as a color, texture, a shape, and a contour, and the sensing feature may include features of the object such as a distance, a height, and reflection intensity.

Illustratively, the visual feature may be extracted from the image visual data by a convolutional neural network, and a three-dimensional geometric feature of the object may be extracted from lidar data as the sensing feature.

Step S122: Confirming the object as a to-be-identified object based on the perception feature of the object.

The to-be-identified object refers to an object on which further determination needs to be performed to determine whether the object has a pollution property.

In an implementation, objects may be compared with a feature of a preset non-pollutant based on the perception feature, to exclude an object that clearly does not have a pollution property, such as furniture and a wall, and confirm a remaining object as the to-be-identified object.

Step S123: Acquiring auxiliary identification information when the to-be-identified object is detected.

The auxiliary identification information may include at least one of historical state memory information of a pollutant and behavior information of a movable object in a maintained environment.

In an implementation, the historical state memory information may include a pollution record, a cleaning record, and the like of the position or of the type of to-be-identified object within a historical time period. The behavior information of the movable object may include an activity trajectory of a pet, an activity status of a family member, and the like.

Step S124: Identifying, based on the auxiliary identification information, the target object having a pollution property from the to-be-identified object.

The to-be-identified object may be comprehensively determined in conjunction with the auxiliary identification information, to identify the target object having a pollution property.

In an implementation, the perception feature and the auxiliary identification information may be input into an object recognition model, and the object recognition model outputs a determination result of whether the to-be-identified object has a pollution property. Illustratively, the object recognition model may be a pre-trained large language model or classification model.

Illustratively, if a to-be-identified object suspected of being a pollutant is detected to be present in a specific region, and the region is, based on a historical record, a region in which a pet frequently moves, pet behavior information may be acquired as the auxiliary identification information, to help determine whether the to-be-identified object is pet excretion having a pollution property.

In the technical solution provided by this embodiment of the present disclosure, the perception feature is extracted, the to-be-identified object is confirmed, the auxiliary identification information is acquired, and the target object having a pollution property is finally identified, so that the accuracy of pollutant detection may be improved through multi-source information, thereby ensuring that the pollutant may be accurately discovered in a timely manner, and further cleaning the pollutant in time.

FIG. 5 is a schematic diagram illustrating a specific procedure of step S130 in an environment maintenance method according to an embodiment of the present disclosure. As shown in FIG. 5, in an embodiment, step S130 described in the above may include step S131 to step S132 below.

Step S131: Determining a pollution attribute of a target object when the target object is detected.

In an implementation, a large language model may be used for performing pollution attribute analysis on the target object.

Step S132: Determining, based on the pollution attribute of the target object, pollution semantics matching the target object from a pollution semantic library.

The pollution semantic library includes a correspondence between pollution attributes and pollution semantics.

In an implementation, the pollution semantic library may be pre-established, mapping combinations of different pollution attributes to corresponding pollution semantics.

Illustratively, pollution semantics corresponding to a combination of diffusivity and adhesiveness may be "diffusion and adhesion pollution", and pollution semantics corresponding to a combination of fluidity and adhesiveness may be "fluidity and adhesion pollution".

In an implementation, a large language model may be used for performing semantic analysis on the pollution attribute of the target object, to match closest pollution semantics in the pollution semantic library.

Illustratively, the large language model may perform comprehensive analysis based on multi-modal information such as image data, a perception feature, and a pollution attribute of the target object, to output structured pollution semantics.

In an implementation, the pollution semantic library may be dynamically updated based on an actual application scenario, for example, continuously expanded and refined based on a newly added pollution attribute or historical detection data.

In the technical solution provided by this embodiment of the present disclosure, the pollution attribute of the target object is determined and the pollution semantics is matched in the pollution semantic library, so that the pollutant is upgraded from simple object identification to a semantic state description, which can provide a standardized data foundation for subsequent pollution diffusion risk analysis and cleaning strategy generation, thereby improving the accuracy of pollution diffusion risk analysis and cleaning strategy generation.

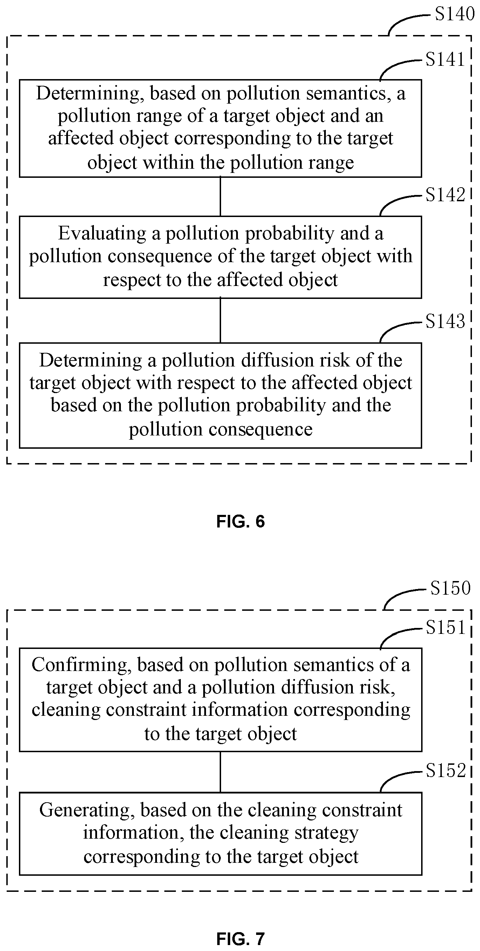

FIG. 6 is a schematic diagram illustrating a specific procedure of step S140 in an environment maintenance method according to an embodiment of the present disclosure. As shown in FIG. 6, in an embodiment, step S140 described in the above may include step S141 to step S143 below.

Step S141: Determining, based on pollution semantics, a pollution range of a target object and an affected object, within the pollution range, corresponding to the target object.

The pollution range refers to a spatial region that may be affected by a pollutant.

In an implementation, the pollution range may be determined based on a pollution attribute, such as diffusivity, fluidity, or the like, included in the pollution semantics.

Illustratively, for a highly diffusive liquid, the pollution range may be set as a region extending outward by a specific distance from a position of the pollutant.

In an implementation, a pollution region may be determined based on a bounding box or a mask image of the target object, and on this basis, the region is extended outward by a preset distance as the pollution range.

The affected object refers to an object that may be affected by the pollutant within the pollution range and that may result in a specific adverse consequence, and may include furniture, a carpet, an electrical outlet, a wooden floor, a charging dock, and the like.

Illustratively, for a liquid close to the electrical outlet, the electrical outlet may be determined as an affected object corresponding to the liquid.

Step S142: Evaluating a pollution probability and a pollution consequence of the target object with respect to the affected object.

The pollution probability refers to a likelihood that the target object causes pollution to the affected object.

In an implementation, the pollution probability may be evaluated based on a pollution attribute, such as diffusivity or fluidity, represented by the pollution semantics, and a factor such as a distance between the affected object and the target object.

The pollution consequence refers to a degree of impact after the target object causes pollution to the affected object.

Illustratively, a consequence of a liquid polluting an electrical outlet may include a short circuit, device damage, a safety hazard, and the like, and a consequence of cat feces polluting a carpet may include an odor, bacterial diffusion, difficulty in cleaning, and the like.

In an implementation, a large language model may be used for performing comprehensive inference on the pollution semantics of the target object and information about the affected object, to evaluate the pollution probability and the pollution consequence of the target object with respect to the affected object.

Illustratively, for a liquid close to a wooden floor, the large language model may infer that the liquid may penetrate into the wooden floor to cause deformation and damage, and the pollution probability with respect to the wooden floor (that is, the affected object) is high and the pollution consequence is severe.

Step S143: Determining the pollution diffusion risk of the target object with respect to the affected object based on the pollution probability and the pollution consequence.

In an implementation, the pollution probability and the pollution consequence may be quantitatively scored and comprehensively calculated to obtain a level of the pollution diffusion risk. For example, the pollution diffusion risk may include a level such as a low risk, a medium risk, a high risk, or an extremely high risk.

Illustratively, for a case in which cat feces is located on a traveling path of the cleaning device 10, an affected object corresponding to the cat feces being the roller brush of the cleaning device 10, and a probability of the cat feces polluting the roller brush being extremely high with a severe consequence, the pollution diffusion risk may be determined to be a high risk.

In the technical solution provided by this embodiment of the present disclosure, the pollution range and the affected object are determined, the pollution probability and the pollution consequence are evaluated, and the pollution diffusion risk is finally determined, to comprehensively reflect a diffusion characteristic and potential impact of the pollutant, and provide an accurate risk evaluation basis for generating the cleaning strategy, so that the cleaning strategy may be adapted to an actual diffusion risk of the pollutant, thereby improving a cleaning effect and eliminating a safety hazard.

FIG. 7 is a schematic diagram illustrating a specific procedure of step S150 in an environment maintenance method according to an embodiment of the present disclosure. As shown in FIG. 7, in an embodiment, step S150 described in the above may include step S151 to step S152 below.

Step S151: Confirming, based on pollution semantics of a target object and a pollution diffusion risk, cleaning constraint information corresponding to the target object.

The cleaning constraint information may include at least one of cleaning priority constraint information, cleaning device constraint information, cleaning parameter constraint information, cleaning mode constraint information, cleaning route constraint information, and cleaning prompt constraint information.

In an implementation, the cleaning priority constraint information is used for indicating a cleaning priority of the target object, for example, a high-risk pollutant has a high cleaning priority. The cleaning device constraint information is used for indicating a type or number of applicable cleaning devices. The cleaning parameter constraint information is used for indicating an operating parameter of the cleaning device, such as a roller brush rotational speed, a suction magnitude, or a water pump discharge amount. The cleaning mode constraint information is used for indicating a cleaning mode, such as a normal sweeping mode, a water-absorption mode, or a hazardous-material sweeping mode. The cleaning route constraint information is used for indicating a travel strategy of the cleaning device, such as detouring or low-speed travel. The cleaning prompt constraint information is used for indicating whether user confirmation is needed.

The cleaning constraint information corresponding to the target object may match the pollution semantics of the target object and the pollution diffusion risk, to ensure that a cleaning strategy subsequently generated based on the cleaning constraint information is more targeted to the target object, thereby further ensuring a cleaning effect on the target object.

In an implementation, the pollution semantics of the target object and the pollution diffusion risk may be input into a large language model, and the large language model outputs corresponding cleaning constraint information.

Step S152: Generating, based on the cleaning constraint information, the cleaning strategy corresponding to the target object.

In an implementation, the cleaning constraint information may be input into a large language model, and the large language model outputs the corresponding cleaning strategy.

Illustratively, for a liquid, cleaning constraint information corresponding to the liquid may include a sweeping robot, a high cleaning priority, low-speed travel, and a water-absorption mode. A cleaning strategy corresponding to the liquid may be generated based on the above-mentioned cleaning constraint information. For example, the cleaning strategy may include the cleaning device 10 participating in cleaning being a sweeping robot. A cleaning task performed by the sweeping robot specifies a reduced travel speed, priority cleaning of the target object, and adoption of the water-absorption mode.

In the technical solution provided by this embodiment of the present disclosure, the cleaning constraint information is confirmed based on the pollution semantics and the pollution diffusion risk and the cleaning strategy is generated, so that the cleaning strategy may differentiate the cleaning treatment for different pollutants, thereby effectively improving the cleaning effect.

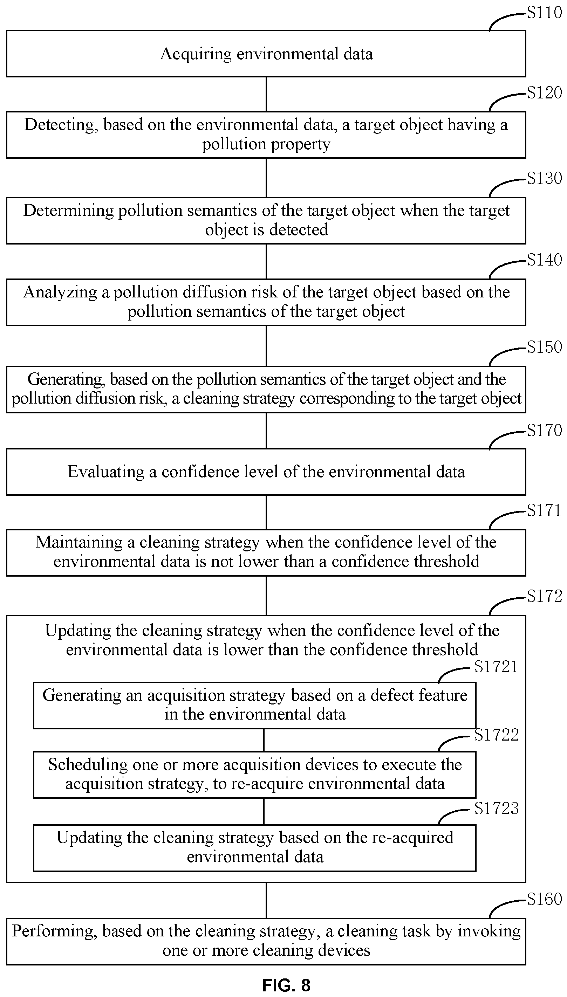

FIG. 8 is a schematic flowchart illustrating environmental data evaluation and cleaning strategy update in an environment maintenance method according to an embodiment of the present disclosure. As shown in FIG. 8, in an embodiment, after step S150 described above and before step S160, the method may further include the step S170 to step S172 below.

Step S170: Evaluating a confidence level of environmental data.

The confidence level of the environmental data refers to a degree of reliability with which the environmental data reflects a pollution situation.

In an implementation, the confidence level may be evaluated based on factors such as image clarity, viewing angle completeness, a lighting condition, and the like of the environmental data.

Illustratively, when the environmental image is blurry, is occluded, has low illumination at night, has a reflection, or the like, the confidence level is relatively low.

Step S171: Maintaining a cleaning strategy when the confidence level of the environmental data is not lower than a confidence threshold.

In an implementation, when the confidence level is not lower than the threshold, it indicates that the environmental data is sufficiently reliable, and an already-generated cleaning strategy may be maintained.

Step S172: Updating the cleaning strategy when the confidence level of the environmental data is lower than the confidence threshold.

In an implementation, when the confidence level is lower than the threshold, it is necessary to update the cleaning strategy based on re-acquired higher-quality environmental data, to ensure that an updated cleaning strategy may match a target object, thereby further ensuring a cleaning effect on the target object.

A procedure of updating the cleaning strategy in step S172 specifically includes the following steps.

Step S1721: Generating an acquisition strategy based on a defect feature in the environmental data.

The defect feature includes at least one of a viewing-angle defect feature and an image-quality defect feature. The viewing-angle defect feature may include, for example, occlusion, a restricted viewing angle, or the like. The image-quality defect feature may include, for example, blurring, low resolution, abnormal exposure, or the like.

In an implementation, the acquisition strategy is a data acquisition scheme formulated to address the defect feature in the environmental data. The acquisition strategy may involve one or more acquisition devices 30 participating in environmental data acquisition, and an acquisition task that needs to be performed by each acquisition device 30. The acquisition task may specify information such as an acquisition parameter and an acquisition mode.

Step S1722: Scheduling the one or more acquisition devices to execute the acquisition strategy, to re-acquire environmental data.

In an implementation, the acquisition strategy may indicate more suitable acquisition devices 30, and instruct these acquisition devices 30 to move to a better observation position, adopt a more suitable viewing angle, acquire a higher-resolution image, and the like.

Illustratively, a sweeping robot may be scheduled to approach a target region to re-acquire an image, or a movable camera may be scheduled to adjust an angle to acquire images from different viewing angles.

In an implementation, the acquisition strategy may further indicate the acquisition device 30 to adjust a shooting parameter, such as increasing resolution, adjusting an exposure parameter, or switching to an infrared mode, to adapt to different lighting conditions and environmental scenarios.

Illustratively, under a low-illumination condition at night, the acquisition device 30 may be scheduled to switch to the infrared mode to re-acquire environmental data.

Step S1723: Updating the cleaning strategy based on the re-acquired environmental data.

Step S120 to step S150 may be re-performed based on the re-acquired environmental data, to further update the cleaning strategy.

In an implementation, the re-acquired environmental data may be fused with original environmental data to improve the reliability of the data, and the cleaning strategy is then updated based on the fused data.

Illustratively, when it is confirmed, based on the re-acquired environmental data, that a to-be-identified object suspected of being a pollutant is a shadow rather than an actual pollutant, an already-generated cleaning strategy may be canceled and a normal cleaning mode is restored. When it is confirmed, based on the re-acquired environmental data, that the to-be-identified object suspected of being a pollutant is an actual pollutant, a more accurate cleaning strategy may be generated based on the re-acquired environmental data.

In the technical solution provided by this embodiment of the present disclosure, before controlling the cleaning device 10 to perform a cleaning task, an intelligent system may evaluate the confidence level of the environmental data and actively schedule, when the confidence level is insufficient, the acquisition device 30 to re-acquire environmental data to update the cleaning strategy, thereby ensuring the effectiveness of performing the cleaning task by the cleaning device 10, and avoiding a waste of resources caused by executing an incorrect cleaning strategy.

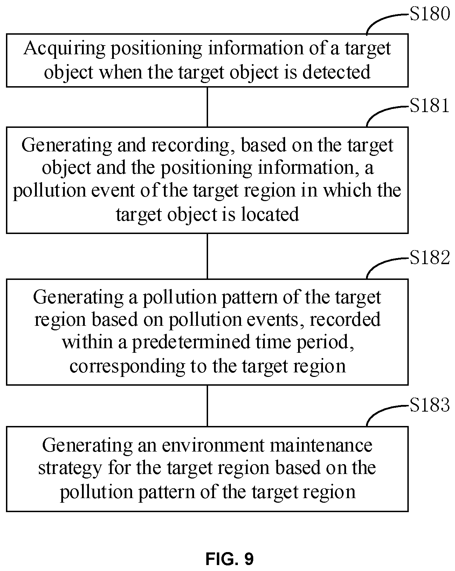

FIG. 9 is a schematic flowchart illustrating pollution pattern analysis and environment maintenance strategy generation in an environment maintenance method according to an embodiment of the present disclosure. As shown in FIG. 9, in an embodiment, the method may further include step S180 to step S183 below.

Step S180: Acquiring positioning information of a target object when the target object is detected.

The positioning information is used for indicating a position of the target object within a maintained environment.

In an implementation, the positioning information may be represented by a coordinate value or a coordinate range of the target object in an environmental coordinate system The environmental coordinate system may be created by the cleaning device 10 when the cleaning device 10 performs a cleaning task in the environment, for example, may be a two-dimensional coordinate system corresponding to a ground within the environment, or may be a three-dimensional coordinate system corresponding to three-dimensional space of the environment.

In an implementation, the positioning information may alternatively be represented by a relative distance and a relative angle between the target object and the cleaning device 10.

In an implementation, the positioning information may further include an identifier of a target region in which the target object is located, such as a region identifier for a living room, a bedroom, a kitchen, a bathroom, or the like, to facilitate subsequent statistics of pollution events by region.

Step S181: Generating and recording, based on the target object and the positioning information, a pollution event of the target region in which the target object is located.

The pollution event is a record of a single instance of pollution of the target object, and may include information such as a type of a pollutant, pollution semantics, a pollution diffusion risk, occurrence time, and positioning information.

In an implementation, the maintained environment may be divided into a plurality of regions, and each detected pollution event may be recorded into a corresponding target region.

Illustratively, a home environment may be divided into regions such as a living room, a bedroom, a kitchen, a bathroom, and the like, and pollution events of all regions are respectively recorded.

Step S182: Generating a pollution pattern of the target region based on pollution events, recorded within a predetermined time period, corresponding to the target region.

The pollution pattern is a comprehensive analysis result of pollution events of the target region within a period of time.

In an implementation, statistics may be acquired on an occurrence frequency, pollution type distribution, a peak time period, and the like of the pollution events of the target region within the predetermined time period, to generate the pollution pattern.

Illustratively, statistics on pollution events that occurred in a living room region over the past month may be acquired, revealing that cat-litter pollution events frequently occur in the evening every day, and this pattern is used as a pollution pattern of the living room region.

In an implementation, a large language model may be used for learning and analyzing historical pollution events, to generate the pollution pattern of the target region.

Step S183: Generating an environment maintenance strategy for the target region based on the pollution pattern of the target region.

The environment maintenance strategy includes at least one of a monitoring strategy for the environmental data, a cleaning strategy, a cleaning frequency, an inspection frequency, and a cleaning priority.

In an implementation, the environment maintenance strategy may be dynamically optimized based on the pollution pattern.

Illustratively, if cat-litter pollution events in a specific region frequently occur in the evening every day, an inspection frequency for the region during an evening period may be increased, and a standby position of the cleaning device may be adjusted in advance to shorten response time.

In an implementation, the environment maintenance strategy may further include optimization of the monitoring strategy, for example, for a region with a historically high frequency of pollution, a monitoring frequency of an acquisition device may be increased, or a monitoring angle may be adjusted. Illustratively, if liquid pollutants frequently appear in a specific region, a monitoring frequency of a humidity sensor in the region may be increased, or a monitoring angle of a camera may be adjusted to an angle that more easily captures a reflection from the liquid.

In an implementation, an environmental pollution prediction model may be constructed based on the pollution pattern, and the environmental pollution prediction model may predict a region, time, and a type of pollution that may occur in the environment for maintenance in the future, thereby achieving proactive and preventive environment maintenance.

In the technical solution provided by this embodiment of the present disclosure, the pollution events are recorded, the pollution pattern is analyzed, and the environment maintenance strategy is generated, so that the system may dynamically optimize environment maintenance behavior based on a long-term learning result, achieve proactive and preventive environment maintenance, and upgrade from passive response to proactive prevention, thereby further improving cleaning efficiency and a cleaning effect.

### Exemplary Apparatus

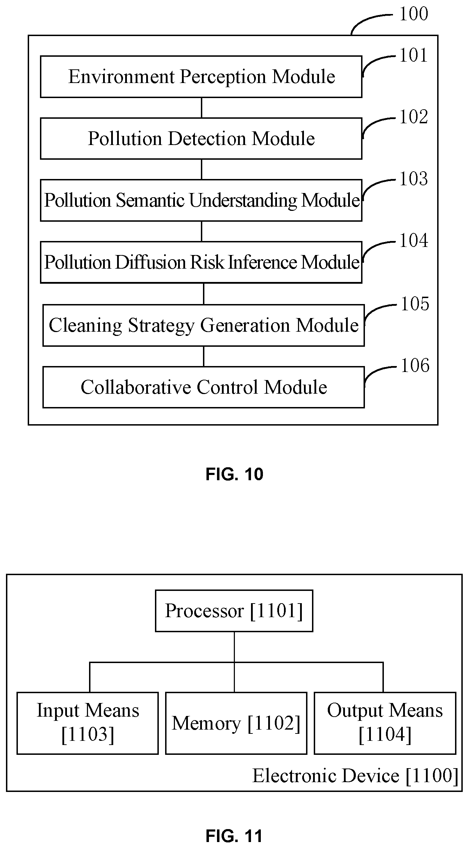

FIG. 10 is a schematic diagram illustrating a structure of an environment maintenance apparatus according to an embodiment of the present disclosure. As shown in FIG. 10, in an embodiment, the apparatus 100 includes:
an environment perception module 101, configured for acquiring environmental data;
a pollution detection module 102, configured for detecting, based on the environmental data, a target object having a pollution property;
a pollution semantic understanding module 103, configured for determining pollution semantics of the target object when the target object is detected;
a pollution diffusion risk inference module 104, configured for analyzing a pollution diffusion risk of the target object based on the pollution semantics of the target object;
a cleaning strategy generation module 105, configured for generating, based on the pollution semantics of the target object and the pollution diffusion risk, a cleaning strategy corresponding to the target object; and
a collaborative control module 106, configured for performing, based on the cleaning strategy, a cleaning task by invoking one or more cleaning devices.

In an embodiment of the present disclosure, the modules of the environment maintenance apparatus may be deployed in the cleaning device, may be deployed in the control device, or may be deployed across the cleaning device and the control device in a distributed manner. That is, functions implemented by the environment maintenance apparatus may be independently implemented by the cleaning device, may be independently implemented by the control device, or may be implemented cooperatively by the cleaning device and the control device. This is not limited by the embodiments of the present disclosure.

For beneficial technical effects corresponding to the exemplary embodiment of this apparatus, refer to the corresponding beneficial technical effects of the exemplary method section described above, which are not repeated herein.

### Exemplary Electronic Device

FIG. 11 is a schematic diagram illustrating a structure of an electronic device according to an embodiment of the present disclosure. The electronic device 1100 includes at least one processor 1101 and a memory 1102.

The processor 1101 may be a CPU (Central Processing Unit, CPU) or another form of processing unit having a data processing capability and an instruction execution capability, and may control another component in the electronic device 1100 to perform a desired function.

The memory 1102 may store one or more computer program products. The computer program product may include various forms of computer-readable storage media, such as a volatile memory and a non-volatile memory. The volatile memory may include, for example, a RAM (Random Access Memory, RAM) and a cache. The non-volatile memory may include, for example, a ROM (Read-Only Memory, ROM), a hard disk, or a flash memory. The computer-readable storage medium may store one or more computer program instructions. The processor 1101 may run the one or more computer program instructions to implement the environment maintenance method and other desired functions in the above embodiments of the present disclosure.

In an example, the electronic device 1100 may further include an input means 1103 and an output means 1104. The components are interconnected through a bus system or other forms of connection mechanisms.

The input means 1103 may further include, for example, a keyboard or a mouse.

The output means 1104 may output various information to the outside, and may include, for example, a display, a loudspeaker, a printer, and a communication network and a remote output device connected thereto.

Certainly, for simplicity, only some components in the electronic device 1100 that are related to the present disclosure are shown in FIG. 11, and components such as a bus and an input/output interface are omitted. Besides, the electronic device 1100 may further include any other appropriate components depending on specific applications.

### Exemplary Computer Program Product and Computer-Readable Storage Medium

In addition to the above method and device, the embodiments of the present disclosure may also provide a computer program product including computer program instructions that, when run by a processor, cause the processor to perform the steps of the environment maintenance method according to the embodiments of the present disclosure that is described in the above "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer-readable storage medium, on which computer program instructions are stored. The computer program instructions, when run by a processor, cause the processor to perform the steps of the environment maintenance method according to the embodiments of the present disclosure that is described in the above "Exemplary Method" section.

The computer-readable storage medium may be one readable medium or any combination of a plurality of readable media. The readable medium may be a readable signal medium or a readable storage medium. The readable storage medium includes, for example but not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM) or a flash memory, an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

## Claims

1. An environment maintenance method, applied to an intelligent system, the method comprising:
acquiring (S110) environmental data;
detecting (S120), based on the environmental data, a target object having a pollution property;
determining (S130) pollution semantics of the target object when the target object is detected;
analyzing (S140) a pollution diffusion risk of the target object based on the pollution semantics of the target object;
generating (S150), based on the pollution semantics of the target object and the pollution diffusion risk, a cleaning strategy corresponding to the target object; and
performing (S160), based on the cleaning strategy, a cleaning task by invoking one or more cleaning devices.

2. The method according to claim 1, wherein the detecting (S120), based on the environmental data, a target object having a pollution property comprises:
extracting (S121) a perception feature of an object present in an environment based on the environmental data, wherein the environmental data comprises at least one of image visual data and sensing measurement data, and the perception feature comprises at least one of a visual feature and a sensing feature;
confirming (S122), based on the perception feature of the object, the object as a to-be-identified object;
acquiring (S123) auxiliary identification information when the to-be-identified object is detected, wherein the auxiliary identification information comprises at least one of historical state memory information of a pollutant and behavior information of a movable object in the environment; and
identifying (S124), based on the auxiliary identification information, the target object having a pollution property from the to-be-identified object.

3. The method according to claim 1, wherein the determining (S130) pollution semantics of the target object when the target object is detected comprises:
determining (S131) a pollution attribute of the target object when the target object is detected, wherein the pollution attribute refers to a physical attribute related to the pollution property; and
determining (S132), based on the pollution attribute of the target object, pollution semantics matching the target object from a pollution semantic library, wherein the pollution semantics is used for representing a pollution attribute of a pollutant, and the pollution semantic library comprises a correspondence between pollution attributes and pollution semantics.

4. The method according to claim 1, wherein the analyzing (S140) a pollution diffusion risk of the target object based on the pollution semantics of the target object comprises:
determining (S141), based on the pollution semantics, a pollution range of the target object and an affected object, within the pollution range, corresponding to the target object;
evaluating (S142) a pollution probability and a pollution consequence of the target object with respect to the affected object; and
determining (S143) the pollution diffusion risk of the target object with respect to the affected object based on the pollution probability and the pollution consequence.

5. The method according to claim 1, wherein the generating (S150), based on the pollution semantics of the target object and the pollution diffusion risk, a cleaning strategy corresponding to the target object comprises:
confirming (S151), based on the pollution semantics of the target object and the pollution diffusion risk, cleaning constraint information corresponding to the target object; and
generating (S152), based on the cleaning constraint information, the cleaning strategy corresponding to the target object,
wherein the cleaning constraint information comprises at least one of cleaning priority constraint information, cleaning device constraint information, cleaning parameter constraint information, cleaning mode constraint information, cleaning route constraint information, and cleaning prompt constraint information.

6. The method according to claim 1, wherein before the performing (S160), based on the cleaning strategy, a cleaning task by invoking one or more cleaning devices, the method further comprises:
evaluating (S170) a confidence level of the environmental data; and maintaining (S171) the cleaning strategy when the confidence level of the environmental data is not lower than a confidence threshold; or
updating (S172) the cleaning strategy when the confidence level of the environmental data is lower than the confidence threshold, wherein the updating the cleaning strategy comprises:
generating (S1721) an acquisition strategy based on a defect feature in the environmental data, wherein the defect feature comprises at least one of a viewing-angle defect feature and an image-quality defect feature;
scheduling (S1722) one or more acquisition devices to execute the acquisition strategy, to re-acquire environmental data; and
updating (S1723) the cleaning strategy based on the re-acquired environmental data.

7. The method according to claim 1, further comprising:
acquiring (S180) positioning information of the target object when the target object is detected;
generating and recording (S181), based on the target object and the positioning information, a pollution event of a target region in which the target object is located;
generating (S182) a pollution pattern of the target region based on pollution events, recorded within a predetermined time period, corresponding to the target region; and
generating (S183) an environment maintenance strategy for the target region based on the pollution pattern of the target region, wherein the environment maintenance strategy comprises at least one of a monitoring strategy for the environmental data, the cleaning strategy, a cleaning frequency, an inspection frequency, and a cleaning priority.

8. The method according to claim 1, wherein the determining (S130) pollution semantics of the target object when the target object is detected comprises:
performing, by a large language model, comprehensive analysis on multi-modal information of the target object, to output structured pollution semantics.

9. The method according to claim 1, wherein the acquiring (S110) environmental data comprises:
acquiring, by the one or more cleaning devices and one or more acquisition devices, respectively, raw environmental data, and
performing multi-view fusion on the raw environmental data to obtain the environmental data.

10. The method according to claim 2, wherein the visual feature is extracted from the image visual data by a convolutional neural network, and the sensing feature is a three-dimensional geometric feature of the object extracted from lidar data.

11. The method according to claim 2, wherein the visual feature comprises a color, texture, a shape, and a contour of the object, and the sensing feature comprises a distance, a height, and reflection intensity of the object.

12. The method according to claim 7, wherein the generating (S183) an environment maintenance strategy for the target region based on the pollution pattern of the target region comprises:
constructing an environmental pollution prediction model based on the pollution pattern, and
predicting, by the environmental pollution prediction model, a region, time, and a type of pollution to occur in the environment for maintenance in the future.

13. An environment maintenance apparatus (100), applied to an intelligent system, the apparatus (100) comprising:
an environment perception module (101), configured for acquiring environmental data;
a pollution detection module (102), configured for detecting, based on the environmental data, a target object having a pollution property;
a pollution semantic understanding module (103), configured for determining pollution semantics of the target object when the target object is detected;
a pollution diffusion risk inference module (104), configured for analyzing a pollution diffusion risk of the target object based on the pollution semantics of the target object;
a cleaning strategy generation module (105), configured for generating, based on the pollution semantics of the target object and the pollution diffusion risk, a cleaning strategy corresponding to the target object; and
a collaborative control module (106), configured for performing, based on the cleaning strategy, a cleaning task by invoking one or more cleaning devices.

14. An electronic device (1100), comprising:
one or more processors (1101), and
a memory (1102), on which computer instructions are stored, wherein the computer instructions, when executed by the one or more processors (1101), cause the one or more processors to perform the environment maintenance method according to any one of claims 1 to 12.

15. A computer-readable storage medium, on which computer program instructions are stored, wherein the computer program instructions, when executed by a processor (1101), cause the processor (1101) to perform the environment maintenance method according to any one of claims 1 to 12.
